# EUROPEAN PATENT SPECIFICATION

(11) **EP 0 346 475 B1**
(45) Date of publication and mention of the grant of the patent: **22.02.1995**
(21) Application number: 88907787.1
(22) Date of filing: 12.09.1988
(51) Int. Cl.: A01K 63/04, C12N 1/20, C12N 5/00

(54) **MULTI-LAYERED GASEOUS PHASE CULTIVATION**
MEHRSCHICHTIGE ZUCHT IN DER GASPHASE
CULTURE EN PHASE GAZEUSE MULTI-COUCHE

(30) Priority: 16.09.1987 JP 231725/87; 18.09.1987 JP 142316/87 U
(43) Date of publication of application: 20.12.1989
(73) Proprietor: YUUGEN KAISHA PARASIGHT, Chiba 280 (JP)
(72) Inventor: NOJIMA, Youko, Kagoshima-shi Kagoshima 890 (JP); NOJIMA, Hisatake, Kagoshima-shi Kagoshima 890 (JP)
(74) Representative: Goddar, Heinz J., Dr.
(86) International application number: PCT/JP88/00925
(87) International publication number: WO 89/02218

(56) References cited:
- EP-A- 0 103 685
- FR-A- 2 618 977
- JP-A- 5 998 636
- JP-B- 4 426 634
- JP-U- 4 923 493
- JP-U-58 122 958
- JP-Y- 4 020 941

## Description

The present invention relates to a multi-layered, gaseus phase cultivation method for culturing aquatic organism in water with the features of first part of claim 1.

In conventional cultivation tanks for culturing aquatic organisms, such as fish, violent aeration, using water-wheel-like machines or acrators, is applied so as to dissolve atmospheric oxygen into relatively shallow cultivation tanks or ponds. If deeper tanks or ponds are introduced for the purpose of mass culture, the oxygen concentration in the water tends to be insufficient for the growth of the organisms, which results in lower production efficiency. However, the use of shallow and large tanks or ponds decreases land utility efficiency and also aggravates the difficulty in collecting and removing feed debris and excretions, which sometimes results in environmental deterioration of the tanks and ponds. Furthermore, in conventional methods for culturing plant or animal cells or micro-organisms on a large scale, the damaged by aeration devices, such as water-wheel-like machines rotating violently to supply atmospheric oxygen into water.

EP-A-0 103 685 discloses a method with the features of the first part of the claim.

It is the object of the invention to provide a cultivation method for aquatic organisms which solves the problem of oxygen deficiency of cultivation tanks. This object is solved by the features of the only claim.

The present invention will be explained in further detail with reference to the accompanying drawings.

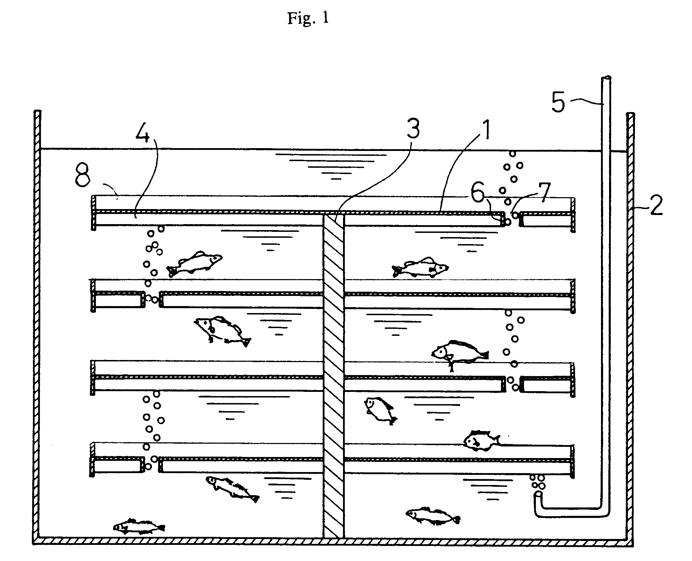

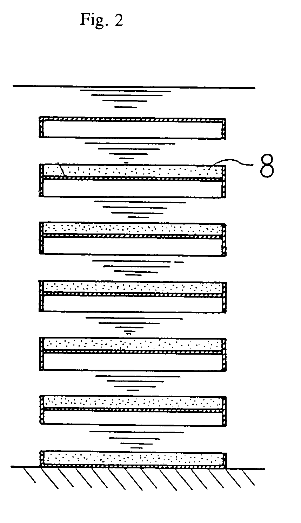

Fig. 1 is a sectional view showing an embodiment of the present invention and Fig. 2 is a side view showing another embodiment of the present invention.

In Fig. 1, reference numeral 2 represents a culture tank and reference numeral 1 a tray-like shallow vat. A plurality of (four, in Fig. 1) vats 1 are disposed with their open surface facing downward as shown in Fig. 1. These vats 1 are disposed at four levels inside the tanks 2 with predetermined gaps between them by means of a support pole 3 which is located substantially at the centre of the tank 2. Reference numeral 5 represents an air supply pipe. The outlet of this air supply pipe 5 is extended in such a manner as to supply the air to the lower open surface of the vats 1 of the lowermost stage. Reference numeral 7 represents a round vent hole which is bored at part of the upper wall of each vat 1. The vent holes 7 are shown disposed at different positions to one another in the embodiment shown in Fig. 1. Reference numeral 6 represents a cylinder (partition wall) implanted at each vent hole 7 for guiding the air into each vent hole 7. The height of this cylinder 6 is a little lower than the height of the peripheral wall of the vat 1.

Next, the function of the present invention having the construction described above will be explained.

First of all, when the air is pressure-fed by the air supply pipe 5 via the lower open surface of the vat 1 of the lowermost stage, the gas accumulates in the vat 1 until the water level is at the base of the cylinders 6 of the vat 1 of that stage. When the supply of the air is continued, the air rises up through the vent hole 7 of the cylinder 6 and is again permitted to accumulate in the vats 1 of the next higher stage. When this air supply operation is repeated, the air is caused to accumulate in each space of each vat 1 which is disposed in the four stages. Thus, in accordance with the present invention, the unstable gas existing in water can be allowed to accumulate to the depth of the cylinder 6 and can be controlled accurately. Accordingly, the spaces of the vats 1 become the air zones and at the same time, become suitable cultivation places of aquatic organisms. Accordingly, a large number of air layers and a large number of cultivation places can be disposed inside one culture tank 2.

In Fig. 2, for clarity, the air supply pipe, support pole and vent hole are not shown. H-shaped vats are formed as shown in the drawing, and sand grains or fine gravel 8 are put on the open spaces on their upper surface so as to form cultivation areas for aquatic organisms and to accomplish the atmospheric underwater environment which is the same as the environment below the natural water surface.

## Claims

1. A multi-layered, gaseous phase cultivation method for culturing aquatic organism in water, comprising the steps of:
disposing a plurality of tray-like shallow vats (1) in a culture tank (2) horizontally and upside down, each of said vats (1) including a substantially horizontal flat portion, a substantially vertical perimeter wall at the perimeter of said flat portion, a hole (7), passing through said flat portion, and a tube (6) surrounding and extending along a central axis of said hole (7);
providing a supporter (3) to support said vats (1) in a stack with certain intervals between said vats (1) in such a manner as to divide said culture tank (2) into multiple spaces;
feeding air from the bottom of said culture tank (2) to said one of said vats (1) disposed in the lowerst portion of said culture tank (2), via an air supply pipe (5); and
reserving said air in an air space (4) in said vats (1) between said flat portion and said perimeter wall,
characterized by
putting sand grains or fine gravel on at least one surface of each horizontal flat portion so as to form each cultivation place for aquatic organism, and
sending the air stored in said air space (4) to the next vat upward through each vat hole (7) in successive vats (1).

## Patentansprüche

1. Verfahren zum Züchten von Wasserorganismen in einer mehrschichtigen Gasphase, das die Stufen umfaßt:
horizontales und umgekehrtes Anordnen einer Mehrzahl von tablettartigen, flachen Wannen (1) in einem Zuchtbehälter (2), wobei jede Wanne (1) einen im wesentlichen horizontalen, ebenen Abschnitt, eine im wesentlichen vertikale Begrenzungswand an dem Umfang des ebenen Abschnitts, eine Bohrung (7), die durch den ebenen Abschnitt tritt, und ein Rohr (6) einschließt, das eine Mittelachse der Bohrung (7) umgibt und sich entlang derer erstreckt;
Bereitstellen eines Trägers (3), der die Wannen (1) mit bestimmten Intervallen zwischen den Wannen (1) gestapelt derart trägt, daß der Zuchtbehälter (2) in mehrere Räume geteilt wird;
Einspeisen von Luft von dem Boden des Zuchtbehälters (2) zu einer der Wannen (1), die in dem untersten Abschnitt des Zuchtbehälters (2) angeordnet ist, über eine Luftversorgungsleitung (5); und
Unterbringen der Luft in einem Luftraum (4) in den Wannen (1) zwischen dem ebenen Abschnitt und der Umfangswand,
gekennzeichnet durch
Aufbringen von Sandkörnern oder Kiessand auf wenigstens einer Oberfläche jedes horizontalen, ebenen Abschnitts, um jeweils einen Zuchtplatz für Wasserorganismen zu bilden, und Weiterleiten der in dem Luftraum (4) gespeicherten Luft zur nächsten Wanne nach oben durch jede Wannenbohrung (7) in nachfolgenden Wannen (1).

## Revendications

1. Procédé de culture en phase gazeuse multicouche pour cultiver un organisme aquatique dans l'eau, comprenant les étapes suivantes :
on met en place horizontalement et à l'envers une pluralité de bacs en forme de plateaux (1) peu profonds, dans un réservoir de culture (2), chacun desdits bacs (1) comprenant une partie plane sensiblement horizontale, une paroi périphérique sensiblement verticale sur le périmètre de ladite partie plane, un trou (7) traversant ladite partie plane et un tube (6) entourant et s'étendant le long d'un axe central dudit trou (7) ;
on installe un organe de support (3) pour supporter lesdits bacs (1) en une pile, avec des intervalles déterminés entre lesdits bacs (1), de manière à diviser ledit réservoir de culture (2), en espaces multiples;
on amène de l'air depuis le fond dudit réservoir de culture (2) à celui desdits bacs (1) qui est disposé dans la partie la plus basse dudit réservoir de culture (2), via un tube d'amenée d'air (5); et
on stocke ledit air dans un espace d'air (4) situé dans lesdits bacs (1) entre ladite partie plane et ladite paroi périphérique,
caractérisé par le fait :
qu'on met en place des grains de sable ou de graviers fins sur au moins une surface de chaque partie plane horizontale, de manière à former chacune un emplacement de culture pour un organisme aquatique, et
on envoie de l'air stocké dans ledit espace d'air (4) au bac suivant, vers le haut, par l'intermédiaire de chaque trou de bac (7), dans des bacs (1) successifs.
